(19) Europäisches Patentamt
European Patent Office
Office européen des brevets

(11) Publication number: 0 141 197
A2

(12) # EUROPEAN PATENT APPLICATION

(21) Application number: 84110943.2

(22) Date of filing: 13.09.84

(51) Int. Cl.⁴: C 08 L 69/00
C 08 L 53/02

(30) Priority: 26.09.83 US 535680

(43) Date of publication of application: 15.05.85 Bulletin 85/20

(84) Designated Contracting States: DE FR GB IT NL

(71) Applicant: GENERAL ELECTRIC COMPANY
1 River Road
Schenectady New York 12305(US)

(72) Inventor: Lee, Gim Fun, Jr.
11 Drawbridge Drive
Albany New York 12203(US)

(74) Representative: Catherine, Alain
General Electric - Deutschland Munich Patent Operations
Frauenstrasse 32
D-8000 München 5(DE)

(54) **Copolycarbonate resin impact modified with diblock copolymer.**

(57) Compositions of aromatic carbonate copolymers and block copolymers of an alkenyl aromatic compound and a diene compound are described. The compositions are moldable into articles characterized by good impact strength.

EP 0 141 197 A2

Croydon Printing Company Ltd.

# COPOLYCARBONATE RESIN IMPACT MODIFIED WITH DIBLOCK COPOLYMER

## BACKGROUND OF THE INVENTION

Polycarbonate resins derived from aromatic units, including halogenated aromatic units, constitute a well known family of engineering thermoplastics which enjoy a variety of application in different settings.

Attempts have been made to enhance and upgrade the properties of polycarbonate resins by admixing them with other polymers. Blends of polycarbonates and styrenic block terpolymers, for instance, are described by Gergen, et al in U.S. Patent Nos. 4,088,711 and 4,090,996.

Polycarbonate copolymers have come to enjoy increasing interest because of higher heat distortion temperatures often associated with them. Copolymers of, for instance, bisphenol-A and polybromo bisphenol-A can be readily molded. Copolymers of this type are disclosed in Wambach, U.S. Patent No. 3,936,400, for use with polyester resins. A difficulty usually encountered with these copolymers, however, is that the impact strength of the molded article is too low, and this tends to restrict their use to applications where resistance to fracture is not a demand.

## INTRODUCTION TO THE INVENTION

The discovery has now been made that the impact strength, and particularly the Izod impact strength, of (a) certain aromatic carbonate copolymers is substantially increased by adding (b) a block copolymer of an alkenyl aromatic compound and a conjugated diene.

The impact strength increase is pronounced both in relatively thin test pieces of one-eighth inch thickness, as well as in larger test pieces of one quarter inch thickness, evidencing a highly desirable consistency

in the positive effect of the block copolymer additive. As a result, the compositions can be extruded, molded or otherwise shaped into a variety of articles which exhibit greater resistance to shattering upon impact.

DESCRIPTION OF THE INVENTION

The compositions of the invention include as an essential component an amount of (a) an aromatic carbonate copolymer in which from 25 to 75 percent by weight of the repeating units are chloro- or bromo-substituted dihydric phenol units, and the remainder of the repeating units are unsubstituted dihydric phenol, glycol or dicarboxylic acid units.

Preferably, the copolymer which constitutes component (a) is comprised of repeating units of the formula

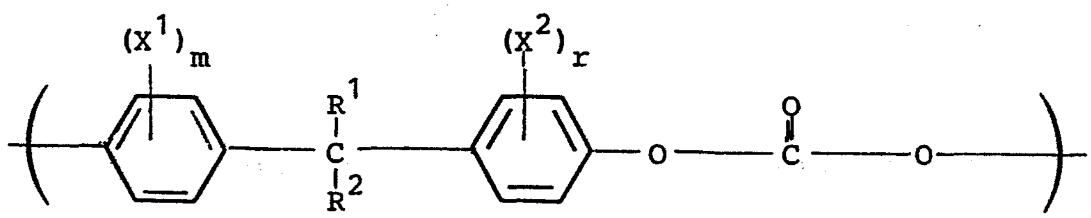

and of the formula

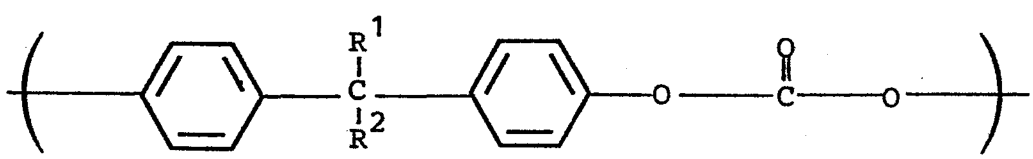

in which $R^1$ and $R^2$ are independently hydrogen, (lower) alkyl of from 1 to 6 carbon atoms or phenyl, $X^1$ and $X^2$ are bromo or chloro, and m and r represent the total number of halogen substituents on each ring and are independently from 1 to 4.

Preparation of the aromatic carbonate copolymer may be accomplished by following known procedures. The techniques described in the above cited U.S. 3,936,400 may be helpful. In general, the copolymer is prepared by reacting a chloro- or bromo- substituted dihydric

phenol and a non-halogen substituted dihydric phenol, or glycol, e.g., ethylene glycol or propylene glycol, or dicarboxylic and, e.g., adipic acid or isophthalic acid, with phosgene or a reactive derivative of phosgene.

In one particular procedure, the chloro- or bromo- substituted dihydric phenol mixed with an unsubstituted phenol or glycol or dicarboxylic acid, and, if used, a chain stopping compound, at a desired molar ratio, are added to a well stirred solution of an amine, e.g., triethylamine or pyridine, in a solvent, e.g., methylene chloride. Phosgene gaz is introduced into the mixture until an excess is present. Reaction is carried out at a temperature of 30 to 60°C., for a period of about one hour or less. The product is recovered by washing the reaction mixture with water and dilute acid and pouring into an amount of a nonsolvent for the polymer, for example, methanol, to achieve precipitation.

In an alternate procedure, the reaction is carried out in a two phase aqueous/organic solvent system, for example, water/methylene chloride, in the presence of a base such as an alkali metal hydroxide, e.g., sodium hydroxide or potassium hydroxide.

Illustrative of the halogen substituted dihydric phenols most useful in the preparation of the aromatic carbonate copolymer are: 3,3-bis(3,5-dibromo-4-hydroxyphenyl)propane (i.e., tetrabromobisphenol-A); 2,2-bis-(3,5-dichloro-4-hydroxyphenyl)propane (i.e., tetrachlorobisphenol-A; bis(2-bromo-4-hydroxyphenyl)methane; bis(2,6-dibromo-4-hydroxyphenyl)méthane; 1,2-bis(2,6-dibromo-4-hydroxyphenyl)éthane; 1,1-bis(2-bromo-6-chloro-4-hydroxyphenyl)éthane; 1,1-bis(3,5-dibromo-4-hydroxyphenyl)éthane; 2,2-bis(2,6-dibromo-4-hydroxyphenyl)pentane; 3,3-bis(3,5-dibromo-4-hydroxyphenyl)

hexane; bis(3,5-dibromo-4-hydroxyphenyl)phenylmethane; bis(3,5-dibromo-4-hydroxyphenyl)cyclohexylmethane; 2,2-bis(4-hydroxy-2,3,5,6-tetrabromophenyl)propane; 2,2-bis(4-hydroxy-2,3,5,6-tetrachlorophenyl)propane; and the like. Especially suitable and preferred is the commercially available compound tetrabromo-bisphenol-A.

Illustrative of suitable non-halogen-substituted dihydric phenols are: 2,2-bis(4-hydroxyphenyl)propane (bis-phenol-A); hydroquinone; resorcinol; 2,2-bis(4-hydroxyphenyl)pentane; 2,4'-dihydroxydiphenyl methane; bis(2-hydroxyphenyl)methane; bis(4-hydroxyphenyl) methane; bis(4-hydroxy-5-nitrophenyl)methane; 1,1-bis (4-hydroxyphenyl)éthane; 3,3-bis(4-hydroxyphenyl) pentane; 2,2'-dihydroxydiphenyl; 2,6-dihydroxy naphtalene; bis(4-hydroxyphenyl)sulfone; 2,2'-dihydroxydiphenyl sulfone; 4,4'-dihydroxyphenyl ether; and 4,4'-dihydroxy-2,5-diethoxydiphenyl ether. A variety of additional dihydric phenols free of halogen substitution may be employed, or in the alternative, a glycol or diacid as indicated above. Especially preferred is bisphenol-A.

A variety of chain stopping compounds can be used in the copolymer forming reaction, and these are especially recommended if shorter polymer chain lengths are desired. The chain stopping compound should be nonfunctional and reactive with the end groups of the repeating units of the copolymer. Normally, the end groups will be reactive derivatives of a carbonate precursor, and so any monofunctional compound capable of reacting with a carbonyl halide, a carbonate ester or a haloformate will be suitable. Illustratively, such compounds can be organic monohydroxy, carboxylic acids or acid halides. Particular mention is made of organic monohydroxy compounds such as alcohols, e.g., methanol, ethanol, decanol, and the like; and chloro-or bromo-substituted phenols.

Preferably, the aromatic carbonate copolymer will be characterized by an intrinsic viscosity of from 0.2 to 0.7 deciliters per gram as measured in solution in p-dioxane at 30°C. The copolymer will thus contain a sufficient number of halogenated and non-halogenated repeating units to provide this viscosity. The starting materials are supplied to the reaction mixture in amounts accordingly.

The compositions also contain a minor amount of (b) a block copolymer of an alkenyl aromatic compound and a conjugated diene. Although any alkenyl aromatic compound can be employed, it preferably has the formula

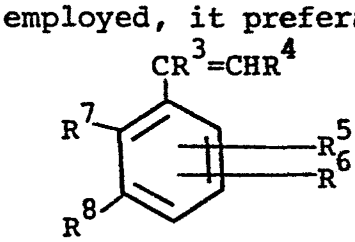

wherein $R^3$ and $R^4$ are selected from the group consisting of hydrogen and lower alkyl groups of from 1 to 6 carbon atoms; $R^5$ and $R^6$ are selected from the group consisting of chloro, bromo, hydrogen, and lower alkyl groups of from 1 to 6 carbon atoms; and $R^7$ and $R^8$ are selected from the group consisting of hydrogen and lower alkyl groups of from 1 to 6 carbon atoms, or $R^7$ and $R^8$ may be concatenated together with a hydrocarbyl group to form a naphthyl group.

Specific examples of alkenyl aromatic monomers include styrene, α-methylstyrene, p-methylstyrene, bromostyrene, chlorostyrene, vinylxylène, vinyl naphthalene and vinyl toluene.

The polydiene component of copolymer (b) is a material having elastomeric properties, preferably being derived from dienes such as 1,3-butadiene; 2-methyl-1,3-butadiene; and 1,3-pentadiene.

The A-B block copolymer can be prepared in ways known to those skilled in the art and decribed in the patent literature. In one procedure, detailed in U.K. 1,145,923, a block copolymer of butadiene and styrene is prepared by mixing these two monomers together in an inert liquid, such as toluene, heptane or xylene, chilling the resulting solution, and adding a small amount of butyl lithium to initiate the polymerization reaction.

Suitable block copolymers are also available commercially, examples of which include diblock copolymers of butadiene and styrene, those designated "KR01" and "KR03" manufactured by Phillips Petroleum Co.

In general, component (b) is present in the compositions in amounts which provide the beneficial impact resistance weight generally from about 1 to less than 50 weight percent of (b) on the weight of (a) and (b) combined can be employed. Amounts in excess of this will normally not confer any additional benefit. Amounts less than this do not appear to provide a geneficial effect. In the preferred embodiments, component (b) will be present in amounts ranging from about 5 to about 30 parts by weight, per 100 parts of (a) and (b) combined.

The compositions of the invention may also be formulated to include one or more additional ingredients, including those which are commonly employed with polycarbonate resins and blends as additives to beneficially influence the chemical and physical properties. For instance, such additives may be selected from among non-reinforcing or reinforcing filler

materials, such as aluminum, iron, nickel, filamentous carbon, acicular calcium silicate, titanium dioxide, potassium titanate, wollastonite, calcium sulfate, bentonite clay, kaolinite and glass flakes or fibers; antioxidants; stabilizers, including ultraviolet and thermal types; pigments, dyes or other coloring agents; flame retardants and/or drip retardants; mold release agents; processing aids; plasticizers; and so forth. Amounts will vary depending on particular requirements, but in general will vary from about 0.5 to about 50 % by weight, based on the total weight of the composition.

Where reinforced embodiments are desired, it is especially advantageous to use glass filaments, particularly in the form of chopped strands up to about 1 inch long, and preferably shorter.

The compositions may be prepared and processed into the finished article in various ways. In one procedure, the ingredients are tumble blended, extruded through a twin screw extruder and injection molded.

The compositions of the invention can also be shaped by extrusion or compression molding. Regardless of how formed, the resulting article, or part, or piece is characterized by good impact strength and is suitable for use in many applications where resistance to fracture or crack formation upon impact is a desirable trait.

DESCRIPTION OF THE SPECIFIC EMBODIMENTS

Compositions in accordance with the invention are illustrated in the examples below. These are intended to show embodiments of the invention, and not to limit the invention in any way. All parts are by weight. The procedure of ASTM D256 was followed for the impact tests. The ASTM D638 was followed for the tensile tests.

## EXAMPLES 1-3

The compositions noted below were prepared by forming a tumble blended pre-mix of the ingredients, extruding the pre-mix and injection molding.

| | 1* | 2 | 3 |
|---|---|---|---|
| **Ingredients** | | | |
| Copolymer of tetrabromo-bisphenol-A, 50 weight percent and bisphenol-A, 50 weight per-cent, intrinsic viscosity 0.33 dl/g in methylene chloride at 25°C | 100 | 90 | 90 |
| Styrene-butadiene block co-polymer (KR01, Phillips Petroleum Co.) | -- | 10 | -- |
| Styrene-butadiene block copolymer (KR03, Phillips Petroleum Co.) | -- | -- | 10 |
| **Properties** | | | |
| Tensile yield, psi x $10^{-3}$ | 11.5 | 10.1 | 10.3 |
| Tensile strength, psi x $10^{-3}$ | 10.5 | 7.9 | 9.3 |
| Elongation, % | 82 | 42 | 81 |
| Izod impact strength, ft.lb/in. of notch: | | | |
| 1/8 inch specimen | 1.6 | 4.0 | 3.3 |
| 1/4 inch specimen | 0.9 | 3.2 | 2.0 |
| Gardner Impact strength, in.lbs. | 350 | 310 | 310 |

* control composition

As can be seen, there is a marked increase in Izod impact strength upon the addition of styrene-butadiene block copolymers to the copolycarbonate, both in the 1/4 and 1/8 inch specimens tested. While there is some decrease in other properties as shown, this is within tolerable limits and more than outweighed by the benefit in impact strength achieved.

All of the above mentioned patents are incorporated herein by reference.

The invention illustrated above can, of course, be modified in light of this disclosure. Particular modified forms will suggest themselves to those skilled in the art. It is to be understood, therefore, that changes can be made in the embodiments shown which are still within the scope of the invention defined in the appended claims.

WHAT IS CLAIMED IS

1. A composition comprising, in admixture;

(a) an aromatic carbonate copolymer of from 25 to 75 percent by weight of a chloro- or bromo-substituted dihydric phenol and from 75 to 25 percent by weight of a second material selected from among non-halogen substituted dihydric phenols, glycols and dicarboxylic acids; and

(b) a minor amount, sufficient to improve the impact strenght of (a), of a diblock copolymer of an alkenyl aromatic compound and a conjugated diene.

2. A composition according to claim 1, in which component (a) is an aromatic carbonate copolymer of a chloro- or bromo-substituted dihydric phenol and a non-halogen substituted dihydric phenol.

3. A composition according to claim 1, in which component (a) is comprised of repeating units of the formula

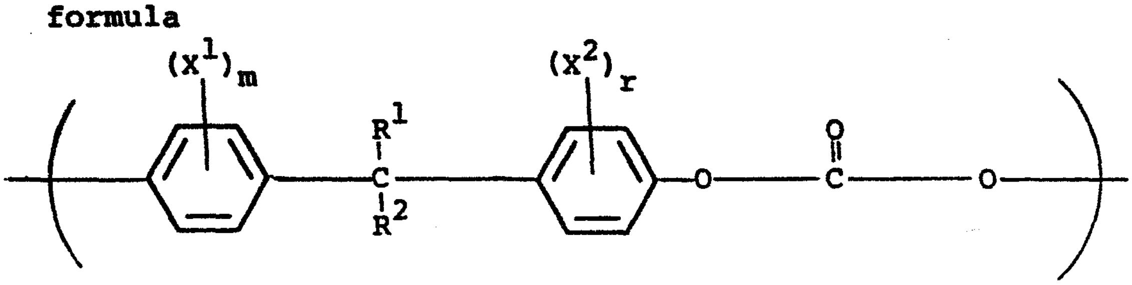

and of the formula

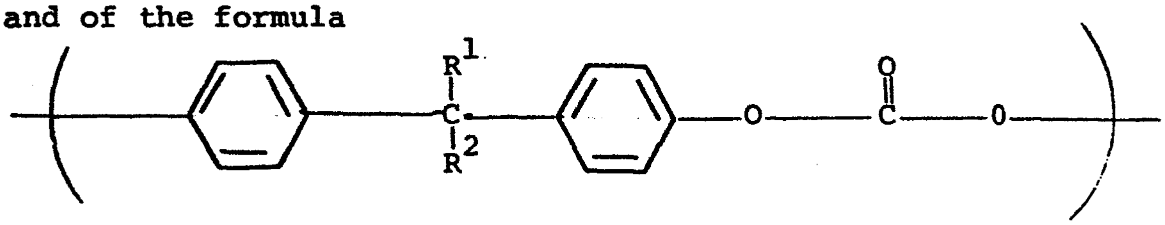

wherein $R^1$ and $R^2$ are independently hydrogen, (lower) alkyl of from 1 to 6 carbon atoms or phenyl, $X^1$ and $X^2$ are bromo or chloro, and m and r represent the total number of halogen substituents on each ring and are independently from 1 to 4.

4. A composition according to claim 1 in which component (a) is a copolymer of tetrabromo bisphenol-A

and bisphenol-A.

5. A composition according to claim 1, in which in component (b), the alkenyl aromatic compound, is a member of the group consisting of styrene, 2-methylstyrène, p-methylstyrene, bromostyrene, chlorostyrene, vinylxylene, vinyl naphthalene and vinyl toluene; and the conjugated diene is a member of the group consisting of 1,3-butadiene, 2-methyl-1,3-butadiene, and 1,3-pentadiene.

6. A composition according to claim 1, in which component (b) is derived from an alkenyl aromatic compound of the formula

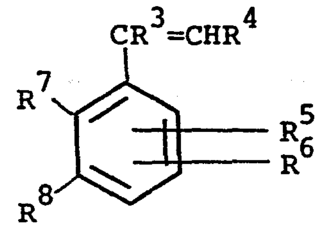

wherein $R^3$ and $R^4$ are selected from the group consisting of hydrogen and lower alkyl groups of from 1 to 6 carbon atoms, inclusive; $R^5$ and $R^6$ are selected from the group consisting of chloro, bromo, hydrogen, and lower alkyl groups of from 1 to 6 carbon atoms, inclusive; and $R^7$ and $R^8$ are selected from the group consisting of hydrogen and lower alkyl groups of from 1 to 6 carbon atoms, inclusive, or $R^7$ and $R^8$ may be concatenated together with a hydrocarbyl group to form a naphthyl group.

7. A composition according to claim 1, in which component (b) is a diblock copolymer of styrene and butadiene.

8. A composition according to claim 1, in which component (b) is present in a amount in the range from about 5 to about 30 parts by weight per 100 parts of (a) and (b) combined.